(19) Europäisches Patentamt
European Patent Office
Office européen des brevets

(11) **EP 4 129 468 A1**

(12) **EUROPEAN PATENT APPLICATION**
published in accordance with Art. 153(4) EPC

(43) Date of publication:
**08.02.2023 Bulletin 2023/06**

(21) Application number: **21777092.4**

(22) Date of filing: **25.03.2021**

(51) International Patent Classification (IPC):
**B01J 23/63** (1995.01)   **B01D 53/94** (1995.01)
**F01N 3/10** (1968.09)

(52) Cooperative Patent Classification (CPC):
**B01D 53/94; B01J 23/63; F01N 3/10**

(86) International application number:
**PCT/JP2021/012657**

(87) International publication number:
**WO 2021/193851 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 JP 2020058362**

(71) Applicant: **KYOCERA CORPORATION**
**Kyoto-shi,**
**Kyoto 612-8501 (JP)**

(72) Inventor: **FUJIE, Kazuyuki**
**Kyoto-shi, Kyoto 612-8501 (JP)**

(74) Representative: **TBK**
**Bavariaring 4-6**
**80336 München (DE)**

(54) **CATALYST, HONEYCOMB STRUCTURE, AND EXHAUST GAS PURIFICATION DEVICE**

(57)    In an aspect of the present disclosure, a catalyst includes an oxide containing 5 or more types of rare earth elements and 1 or more types of platinum group elements. The catalyst has a configuration entropy of a cation site determined based on (i) the number of types of the rare earth elements and the platinum group element that can be arranged in the cation site in a crystalline structure of the oxide, and (ii) each proportion of the rare earth elements and the platinum group element of more than 1.7R, where R is a gas constant.

FIG. 2

**Description**

TECHNICAL FIELD

The present disclosure relates to catalysts and the like containing platinum group elements.

BACKGROUND OF INVENTION

Platinum group elements have been used as catalysts. When this kind of catalyst is used especially at high temperatures, the properties of the catalyst may be deteriorated due to the sintering of the platinum group elements. To solve such issues, attempts have been made to suppress sintering by solid-dissolving the platinum group elements in a crystal lattice of oxides, as in the techniques described in, for example, Non-Patent Documents 1 and 2 below.

CITATION LIST

NON-PATENT LITERATURE

Non-Patent Document 1: H. Chen et al., J. Mater. Chem. A, 2018, 6, 11129-11133
Non-Patent Document 2: H. Chen et al., ACS Materials Lett., 2019, 1, 83-88

SUMMARY

In an embodiment of the present disclosure, a catalyst includes an oxide containing 5 or more types of rare earth elements and 1 or more types of platinum group elements. The catalyst has a configuration entropy of a cation site determined based on (i) the number of types of the rare earth elements and the platinum group element(s) that can be arranged in the cation site in a crystalline structure of the oxide, and (ii) each proportion of the rare earth elements and the platinum group element(s) of more than 1.7R, where R is the gas constant.

In an embodiment of the present disclosure, a catalyst includes an oxide containing 5 or more types of rare earth elements and 1 or more types of platinum group elements. Each of the rare earth elements occupies 10% or more of the cation site in the crystalline structure of the oxide.

BRIEF DESCRIPTION OF THE DRAWINGS

FIG. 1 is a schematic view illustrating an exhaust gas purifier according to an embodiment of the present disclosure.
FIG. 2 is a graph showing decomposition temperatures with respect to the numbers of rare earth elements contained in catalysts in Examples and Comparative Examples.
FIG. 3 is a graph showing molar fractions of platinum group elements with respect to the numbers of rare earth elements contained in catalysts in Examples and Comparative Examples.
FIG. 4 is an STEM image of a catalyst of Example 1.

DESCRIPTION OF EMBODIMENTS

In general, a platinum group element has a low chemical affinity and is less likely to form solid solution in an oxide, and thus has a low active site density. When a known catalyst, in which an oxide is solid-solved with platinum group elements, is used, the catalyst system tends to be large. Due to the low chemical affinity of the platinum group elements, i.e., the high enthalpy of solid solution of the platinum group elements, known catalysts in which platinum group elements are solid-solved tend to be thermally decomposed and thus are easily phase-separated under high temperature environments.

According to an aspect of the present disclosure, catalysts with more platinum group elements in solid solution of an oxide can be made compared to known catalysts. An aspect of the present disclosure can make catalysts having higher decomposition temperatures compared to known catalysts.

First Embodiment

An embodiment of the present disclosure will be described in detail below.

In the present embodiment, a catalyst may be an oxide containing 5 or more types of rare earth elements and 1 or more types of platinum group elements. In more detail, in the present embodiment, the catalyst may be a solid solution oxide containing 5 or more types of rare earth elements and 1 or more types of platinum group elements.

Note that, in an aspect of the present disclosure, the catalyst may contain another substance as long as the catalyst includes the oxide described above. That is, in the present disclosure, the catalyst may be the oxide as it is or may be a catalyst containing the oxide. In the following description, a case where the catalyst is the oxide as it is will be described.

Platinum Group Element

In the present embodiment, the catalyst includes 1 or more types selected from the group consisting of Ru, Rh, Pd, Os, Ir, and Pt, which are the platinum group elements. The platinum group elements have high exhaust gas purification performances and are widely used.

Rare Earth Element

In the present embodiment, the catalyst includes 5 or more types selected from the group consisting of Sc, Y, and lanthanoids (La, Ce, Pr, Nd, Pm, Sm, Eu, Gd, Tb, Dy, Ho, Er, Tm, Yb, and Lu), which are the rare earth elements.

In the catalyst of the present embodiment, each of the rare earth elements occupies 10% or more of the cation site in the crystalline structure of the oxide and/or entropy $S_{config}$ of the cation site of the oxide described below is more than 1.7R (R is the gas constant; R = 8.314 [J/(K·mol)]).

The configuration entropy $S_{config}$ of the cation site (molar entropy) is a numerical value calculated by the following equation.

[Math. 1]

$$S_{config} = -R \sum_{i=1}^{N} x_i \ln x_i$$

In the equation, R is the gas constant (8.314 J/(K mol)), N is the number of elements of cations (number of types), and $x_i$ is a molar composition (molar fraction) of the $i^{th}$ element. The "elements of cations" refers to the 5 or more types of the rare earth elements and the 1 or more types of the platinum group elements contained in the catalyst (oxide) of the present embodiment, and the value of N is a total of the number of types of the rare earth elements and the number of types of the platinum group elements contained in the catalyst of the present embodiment. As indicated by the equation, the configuration entropy $S_{config}$ of the cation site is a value determined by the number and proportion of types of elements that can be arranged at the cation site in the crystalline structure of the oxide. In more detail, the above-described $x_i$ is a proportion of the amount of a substance of the $i^{th}$ element (i is a number from 1 to N) with respect to the total amount of substances of 5 or more types of the rare earth elements and 1 or more types of the platinum group elements that are contained in the oxide and that can be arranged at the cation site in the crystalline structure of the oxide.

In the present embodiment, the catalyst (oxide) may contain another element that can be arranged at a cation site and that is not the rare earth elements and platinum group element (hereinafter, for convenience of the explanation, referred to as "unspecified element"). In the present embodiment, the catalyst (oxide) may contain the unspecified element as an inevitable impurity. Among the total amount of substances of the elements that can be arranged at the cation site in the crystalline structure of the oxide, 20 mol% or less of the unspecified element may be contained.

In the catalyst (oxide) of the present embodiment, supposing that the oxide includes the unspecified element described above, the rest excluding the unspecified element from the oxide is only required to satisfy various conditions as the catalyst (oxide) of the present embodiment. For example, in the rest excluding the unspecified element from the oxide, the above-described $x_i$ and the configuration entropy $S_{config}$ of the cation site are only required to be determined for 5 or more types of the rare earth elements and 1 or more types of the platinum group elements contained in the rest.

As described above, in the present embodiment, a catalyst has an oxide containing 5 or more types of rare earth elements and 1 or more types of platinum group elements. In the present embodiment, the catalyst has a configuration entropy $S_{config}$ of a cation site of more than 1.7R, where R is the gas constant, which is determined based on the number and proportion of types of the rare earth elements and the platinum group elements that can be arranged in the cation site in a crystalline structure of the oxide.

All of the rare earth elements have closed s-orbital and p-orbitals, have the number of electrons in d-orbitals of 0 or 1, and have chemical characteristics similar to each other. By allowing 5 or more types of the rare earth elements to be contained, the oxide as the catalyst can have lower enthalpy and higher entropy. The oxide can thus have small Gibbs energy. In the catalyst of the present embodiment, the configuration entropy $S_{config}$ of the cation site is more than 1.7R (R is the gas constant). The Gibbs energy of the oxide can be thus made even smaller.

As described above, in the present embodiment, the catalyst has small Gibbs energy of the oxide. The platinum group elements, which are typically hard to exist in an oxide as a cation, can be contained in a larger amount in solid solution of the oxide, compared to known catalysts. A higher active site density can be thus achieved compared to known catalysts. As a result, a smaller catalyst system (e.g., exhaust gas purifier) can be achieved.

In the present embodiment, due to small Gibbs energy, the catalyst is chemically stable even when the platinum group element is contained in solid solution. Thus, even when the catalyst is used at a high temperature, maintenance of the solid solution state of the platinum group element in the oxide can be easier. That is, a higher decomposition temperature can be achieved (specifically, the decomposition temperature of the catalyst of the present embodiment is 890°C or higher) compared to a known oxide having a platinum group element in solid solution. Sintering of the platinum group element can be thus prevented, and the deterioration of catalytic ability can be suppressed. Thus, the catalyst of the present embodiment can be suitably used as a catalyst for exhaust gas purification.

Rare earth elements contain many f electrons hardly contributing to bonding. When a rare earth element is contained together with a platinum group element in the oxide, the f electrons of the rare earth element are donated to the platinum group element, and thus the valency of the platinum group element becomes closer to substantially 0. As a result, the solid solution state of the platinum group element in the oxide can be maintained.

When the platinum group element is contained in solid solution of the oxide, an advantage of maintaining a high catalytic activity can be achieved when the oxygen partial pressure in the reactive gas is varied. For example, with a known exhaust gas purification catalyst, when exhaust gas contains a larger amount of oxygen, NOx reduction activity decreases, and when the oxygen amount is reduced, oxidative activity of CO or hydrocarbon may decrease.

With the catalyst of the present disclosure, when the oxygen partial pressure is varied, the oxide absorbs and releases oxygen, the oxygen is exchanged between the active site, which are the platinum group element and the oxide, and thus change in the oxygen partial pressure can be covered. In the catalyst of the present disclosure, such exchange of oxygen occurs smoothly because the platinum group particles are contained in solid solution of the oxide. As a result, the catalyst of the present disclosure has an improved catalytic activity. On the other hand, when the platinum group element is not contained in solid solution of the oxide (e.g., a case of a known catalyst in which a surface of an oxide particle carries a platinum group particle), the part where the exchange of oxygen between the oxide and the platinum group particle occurs is limited to an interface between the oxide and the platinum group particle. With such a known catalyst, the catalytic activity decreases when oxygen partial pressure of a reactive gas is varied.

In the present embodiment, the catalyst preferably contains Ce as the rare earth element. Ce has a stable tetravalent state and has more excess electrons than those of other rare earth elements. By allowing the catalyst to contain Ce, a larger number of electrons can be donated to the platinum group element, and the platinum group element in the oxide becomes more stable. A larger amount of the platinum group element can be thus contained in solid solution of the oxide, and an even higher decomposition temperature can be achieved.

In the present disclosure, the catalyst preferably contains (i) each of 5 or more types of the rare earth elements and (ii) one type of the platinum group element or each of two or more types of the platinum group elements in identical molar fractions ($x_i$ described above). The configuration described above can maximize the configuration entropy $S_{config}$ of the cation site and can make Gibbs energy small when the total number of types of the rare earth elements and the platinum group elements are the same (fixed). The molar fraction of (i) above and the molar fraction of (ii) above being "the same" only requires the molar fraction of (i) above and the molar fraction (ii) above being the same numerical values when the molar fractions are expressed with two decimal places.

In an aspect of the present disclosure, the catalyst may have an average ionic radius of the rare earth elements contained in the oxide of 0.95 Å or more. In the present specification, "average ionic radius of the rare earth elements contained in the oxide" is a value calculated as described below.

Each of 5 or more types of the rare earth elements contained in the oxide is referred to as Re1, Re2, ... Rex (x is an integer of 5 or more). The product of the ionic radius of Re1 and the molar fraction of Re1 is referred to as Pr1. Similarly, the product of the ionic radius and the molar fraction of Re2, ... Rex are respectively referred to as Pr2, ... Prx. By summing up Pr1 to Prx (calculating the sum total of Pr1 to Prx), the average ionic radius of the rare earth elements contained in the oxide (hereinafter, simply referred to as "average ionic radius REIa") is determined.

In the catalyst having the average ionic radius REIa of less than 0.95 Å, the distance between the cation and the oxide ion in the crystal lattice of the oxide is relatively small. Accordingly, relatively strong Coulomb attraction occurs in the crystal lattice of the oxide, and thus the oxide ion is less likely to move. On the other hand, in the catalyst having the average ionic radius REIa of 0.95 Å or more, the Coulomb attraction caused in between the cation and the oxide ion in the crystal lattice of the oxide is relatively weak, thus oxide ion easily moves, and oxygen is easily absorbed or released. As a result, when oxygen partial pressure in the reactive gas is varied, due to absorption and release of oxygen from the oxide, catalytic reaction can be assisted, and catalytic activity becomes higher.

In the present specification, the ionic radius of the rare earth elements used in calculation of the average ionic radius REIa is an ionic radius of Shannon (R. D. Shannon, Acta. Cryst. A 32, 751 (1976)) and is a value calculated by taking Ce as in the tetravalent state and 8-coordination and other elements as in the trivalent state and 6-coordination. Table 1 lists ionic radii of rare earth elements.

Table 1

| Atomic number | Symbol of element | Valence | Coordination number | Ionic radius (Å) |
|---|---|---|---|---|
| 21 | Sc | 3+ | 6 | 0.745 |
| 39 | Y | 3+ | 6 | 0.900 |
| 57 | La | 3+ | 6 | 1.032 |
| 58 | Ce | 4+ | 8 | 0.970 |
| 59 | Pr | 3+ | 6 | 0.990 |
| 60 | Nd | 3+ | 6 | 0.983 |
| 61 | Pm | 3+ | 6 | 0.970 |
| 62 | Sm | 3+ | 6 | 0.958 |
| 63 | Eu | 3+ | 6 | 0.947 |
| 64 | Gd | 3+ | 6 | 0.938 |
| 65 | Tb | 3+ | 6 | 0.923 |
| 66 | Dy | 3+ | 6 | 0.912 |
| 67 | Ho | 3+ | 6 | 0.901 |
| 68 | Er | 3+ | 6 | 0.890 |
| 69 | Tm | 3+ | 6 | 0.880 |
| 70 | Yb | 3+ | 6 | 0.868 |
| 71 | Lu | 3+ | 6 | 0.861 |

In an aspect of the present disclosure, the catalyst may contain Ce as the rare earth element and have the average ionic radius REIa of 0.97 Å or more. Generally, when an oxide containing a rare earth element is exposed to a high temperature for a long period of time, oxide ions are regularly arranged in a crystal lattice, thus movement of the oxide ions is restricted, and thus oxygen absorption and release capability decreases. However, when the average ionic radius REIa is 0.97 Å or more, because the interaction between the cation and the oxide ion is relatively weak, regular arrangement of the oxide ions hardly occurs even when the oxide is exposed to a high temperature, and oxygen absorption and release capability tends to be maintained.

When the oxide containing the rare earth elements does not contain Ce, the oxide tends to undergo phase transition to an A-type or B-type rare earth oxide structure when exposed to a high temperature. When such phase transition occurs, oxygen absorption and release capability significantly deteriorates, and catalytic activity decreases.

Meanwhile, when the oxide containing the rare earth elements includes Ce, the oxide is less likely to undergo phase transition to an A-type or B-type rare earth oxide structure because Ce in the tetravalent state and 8-coordination is stable. Thus, C-type rare earth oxide structure is maintained, and oxygen absorption and release capability is maintained.

In an aspect of the present disclosure, the catalyst preferably contains Pd as the platinum group element. For the platinum group element contained in the solid solution of the oxide to exhibit catalytic activity, reduction of the platinum group element is required. Pd is contained in solid solution of the oxide as the divalent state and is more easily reduced compared to the tetravalent state Pt and the trivalent state Rh and Ru. In an aspect of the present disclosure, the catalyst thus exhibits relatively high catalytic activity by allowing Pd to be contained as the platinum group element.

In the catalyst of an aspect of the present disclosure, the particle of the oxide may have a hollow form, and this case enhances the catalytic activity. This is because the particle having a hollow form has a relatively larger specific surface area than that of a dense particle.

In an aspect of the present disclosure, the catalyst may contain an oxide containing 5 or more types and 9 or less types of rare earth elements and one type or two or more types of platinum group elements. In the catalyst of an aspect of the present disclosure, it is naturally understood from the description of the present specification that the number of types of the platinum group elements contained in the oxide does not need to be limited.

In the catalyst of an aspect of the present disclosure, each of the rare earth elements may occupy 10% or more and 17% or less of the cation site in the crystalline structure of the oxide. In an aspect of the present disclosure, the catalyst may contain 5 or more types and 9 or less types of rare earth elements occupying 10% or more of the cation site in the crystalline structure of the oxide.

In an aspect of the present disclosure, the catalyst contains Ce as the rare earth element, Ce may occupy 10% or more and 25% or less, 15% or more and 25% or less, and 20% or more and 25% or less, of the cation site in the crystalline structure of the oxide. In this case, each of the plurality of types of rare earth elements other than Ce may occupy 10% or more of the cation site in the crystalline structure of the oxide, and the plurality of types of the rare earth elements (except Ce) may be 4 types or more and 7 types or less, and 4 types or more and 8 types or less. By allowing the oxide to contain a large amount of Ce, amounts of absorption and release of oxygen due to redox of $Ce^{3+}/Ce^{4+}$ increase, and catalytic activity at the time of atmosphere change (e.g., when oxygen partial pressure of the reactive gas is varied) is improved. The catalytic activity at the time of atmosphere change being improved means that a high catalytic activity is maintained when, for example, the oxygen partial pressure in the reactive gas is varied. Meanwhile, when Ce occupies 25% or more of the cation site in the crystalline structure of the oxide, the configuration entropy $S_{config}$ decreases, and the solid solution state of the platinum group element in the oxide may become relatively unstable.

In an aspect of the present disclosure, the catalyst contains Ce and La as the rare earth elements, Ce occupies the cation site in the crystalline structure of the oxide within the proportion described above, and La may occupy 10% or more and 25% or less of the cation site in the crystalline structure of the oxide. La may occupy 15% or more and 25% or less, and 15% or more and 20% or less, of the cation site in the crystalline structure of the oxide. In this case, each of the plurality of types of rare earth elements other than Ce and La may occupy 10% or more of the cation site in the crystalline structure of the oxide. The plurality of types of rare earth elements (except Ce and La) may be 3 or more types and 4 or less types, 3 or more types and 5 or less types, 3 or more types or 6 or less types, or 3 or more types and 7 or less types. By allowing a large amount of La in the oxide, the average ionic radius REIa can be made large, amounts of absorption and release of oxygen are increased, and the catalytic activity at the time of atmosphere change is improved. Meanwhile, when La occupies 25% or more of the cation site in the crystalline structure of the oxide, the configuration entropy $S_{config}$ decreases, and the solid solution state of the platinum group element in the oxide becomes unstable. Because La is stable in the trivalent state, La does not directly contribute to the absorption and release of oxygen. Thus, when La contained in the oxide is in an excessively large amount, the amounts of absorption and release of oxygen relatively decrease, and the catalytic activity at the time of atmosphere change may decrease.

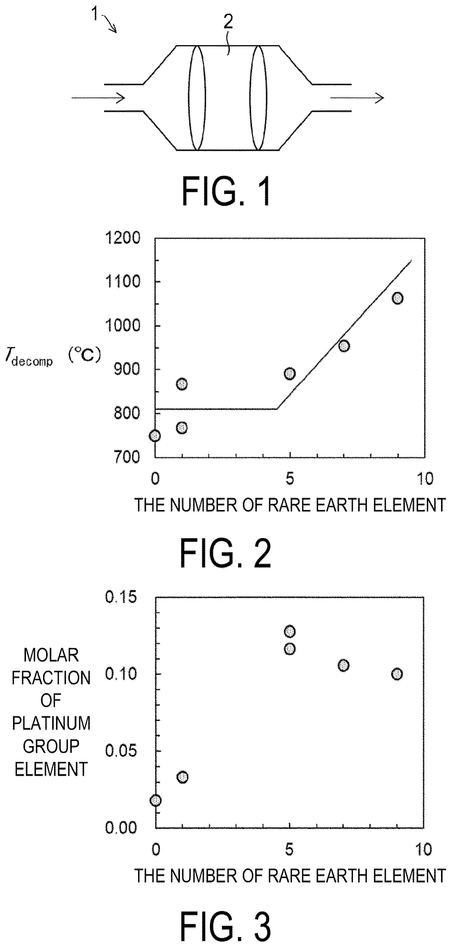

The exhaust gas purifier 1 of the present embodiment will be described. FIG. 1 is a schematic view illustrating an exhaust gas purifier 1. As illustrated in FIG. 1, the exhaust gas purifier 1 includes a honeycomb structure 2. The honeycomb structure 2 supports the catalyst of the present embodiment. The exhaust gas purifier 1 is an apparatus converting harmful gas contained in exhaust gas emitted from a vehicle (e.g., carbon monoxide, NOx) into harmless gas by passing the harmful gas through the honeycomb structure 2 supporting the catalyst. Because the exhaust gas purifier 1 includes the catalyst of the present embodiment, the platinum group element is less likely to be sintered at a high temperature. The exhaust gas purifier is thus less likely to undergo reduction of catalytic ability even when exposed to exhaust gas at a high temperature.

Manufacturing Method

A manufacturing method of the catalyst of the present embodiment will be described. In the present embodiment, the catalyst can be manufactured by a spray pyrolysis method. Specifically, the manufacturing method of the catalyst of the present embodiment may include solution preparation and pyrolysis.

In the solution preparation, a solution is produced by dissolving rare earth elements and platinum group element(s) in ion exchanged water to form a desired metal element ratio. In more detail, the solution is produced by dissolving salts (e.g., nitrate) of rare earth elements and salt(s) (e.g., nitrate) of platinum group element(s) in ion exchanged water.

In the pyrolysis, first, the solution is turned into a spray form by applying ultrasonic waves to the solution produced in the solution preparation. Then, the solution in the spray form is allowed to flow into a tubular furnace heated to a high temperature (e.g., 1000°C) using air as a carrier gas and pyrolyzed in the inner portion of the tubular furnace. This can manufacture the catalyst of the present embodiment. The catalyst manufactured by the pyrolysis are collected, for example, by a filter.

Other Configuration

The description for the molar fraction of each element in the catalyst of the present disclosure may be understood as the description for the molar fraction of a preparation composition in the solution preparation described above. For example, the catalyst of an aspect of the present disclosure may be understood as being produced by using a solution produced in the solution preparation described above with a preparation composition, by which each of rare earth elements occupies 10% or more of the cation site in the crystalline structure of the oxide. Similarly, the catalyst of an aspect of the present disclosure may be understood as being produced by, for example, using a solution produced in the solution preparation described above with a preparation composition, by which the configuration entropy $S_{config}$ of the cation site of the oxide is more than 1.7R.

Similarly, the catalyst of an aspect of the present disclosure may be understood as being produced by using a solution produced in the solution preparation described above with a preparation composition, by which the conditions for the catalyst described above are satisfied.

This is because, for example, a case where the molar fraction of the platinum group element actually contained in the solid solution of the oxide is less than the calculated value of the preparation composition (when the solid solution rate is less than 100%) means increase of the proportion (molar fraction) of the cation site in the crystalline structure of the oxide occupied by the rare earth element. In the catalyst of the present disclosure, because the solid solution rate of the platinum group element is relatively high, the difference between the molar fraction of the preparation composition and the molar fraction actually contained in the catalyst is relatively small for each of 5 or more types of the rare earth elements and 1 or more types of the platinum group elements. The difference between the configuration entropy $S_{config}$ calculated based on the molar fraction in the preparation composition and the configuration entropy $S_{config}$ calculated based on the molar fraction in the actual catalyst is also relatively small (see the following Examples).

EXAMPLES

Examples according to the present disclosure will be described below. The present disclosure is not limited to the following examples.

First Example

In the present example, by the following manufacturing methods, catalysts of Examples 1 to 5 were produced as examples of the present disclosure and catalysts of Comparative Examples 1 to 5 were produced as comparative examples.

Example 1

The production of a catalyst of Example 1 will be described. First, a solution was produced by dissolving $Y(NO_3)_3 \cdot nH_2O$, $La(NO_3)_3 \cdot 6H_2O$, $Ce(NO_3)_3 \cdot 6H_2O$, $Pr(NO_3)_3 \cdot 6H_2O$, $Sm(NO_3)_3 \cdot 6H_2O$, and $Pt(NH_3)_4(NO_3)_2$ in 200 mL of ion exchanged water, and molar fractions of the rare earth elements and the platinum group element were equivalent amounts (i.e., molar fraction of each of the 5 types of the rare earth elements and the 1 type of the platinum group element became 1/6 = 0.17). This solution was adjusted to have the total concentration of the rare earth elements and the platinum group element of 0.1 mol/L.

Then, the produced solution was turned into a spray form by applying ultrasonic waves to the solution. Then, the solution in the spray form was allowed to flow into a tubular furnace heated to 1000°C using air at 3 standard liter per minute (standard liter per minute is abbreviated as slm; unit representing a gas flow rate at 0°C and 101.3 kPa, in L/min) as a carrier gas and pyrolyzed in the inner portion of the tubular furnace. Thus, the catalyst of Example 1 was produced. The produced catalyst was collected by a filter.

Example 2

A catalyst of Example 2 was produced in the same and/or similar manner as for the catalyst of Example 1 except for using $Nd(NO_3)_3 \cdot 6H_2O$ in place of $Ce(NO_3)_3 \cdot 6H_2O$ of the starting material.

Example 3

The production of a catalyst of Example 3 will be described. First, a solution was produced by dissolving $Y(NO_3)_3 \cdot nH_2O$, $La(NO_3)_3 \cdot 6H_2O$, $Ce(NO_3)_3 \cdot 6H_2O$, $Pr(NO_3)_3 \cdot 6H_2O$, $Nd(NO_3)_3 \cdot 6H_2O$, $Sm(NO_3)_3 \cdot 6H_2O$, $Gd(NO_3)_3 \cdot 6H_2O$, and $Pt(NH_3)_4(NO_3)_2$ in 200 mL of ion exchanged water, and molar fractions of the rare earth elements and the platinum group element were equivalent amounts (i.e., molar fraction of each of the 7 types of the rare earth elements and the 1 type of the platinum group element became 1/8 = 0.13). The rest of the manufacturing method was performed in the same and/or similar manner as in Example 1, and thus the catalyst of Example 3 was obtained.

Example 4

The production of a catalyst of Example 4 will be described. First, a solution was produced by dissolving $Y(NO_3)_3 \cdot nH_2O$, $La(NO_3)_3 \cdot 6H_2O$, $Ce(NO_3)_3 \cdot 6H_2O$, $Pr(NO_3)_3 \cdot 6H_2O$, $Nd(NO_3)_3 \cdot 6H_2O$, $Sm(NO_3)_3 \cdot 6H_2O$, $Gd(NO_3)_3 \cdot 6H_2O$, $Dy(NO_3)_3 \cdot 6H_2O$, $Yb(NO_3)_3 \cdot nH_2O$, and $Pt(NH_3)_4 (NO_3)_2$ in 200 mL of ion exchanged water, and molar fractions of the rare earth elements and the platinum group element were equivalent amounts (i.e., molar fraction of each of the 9 types of the rare earth elements and the 1 type of the platinum group element became 1/10 = 0.10). The rest of the manufacturing method was performed in the same and/or similar manner as in Example 1, and thus the catalyst of Example 4 was obtained.

Example 5

A catalyst of Example 5 was produced in the same and/or similar manner as for the catalyst of Example 4 except for using $Rh(NO_3)_3 \cdot nH_2O$ in place of $Pt(NH_3)_4(NO_3)_2$ of the starting material.

Comparative Example 1

The production of a catalyst of Comparative Example 1 will be described. First, a solution was produced by dissolving $Ce(NO_3)_3 \cdot 6H_2O$ and $Pt(NH_3)_4(NO_3)_2$ in 200 mL of ion exchanged water, and molar fractions Ce:Pt were 0.90:0.10. The rest of the manufacturing method was performed in the same and/or similar manner as in Example 1, and thus the catalyst of Comparative Example 1 was obtained.

Comparative Example 2

The production of a catalyst of Comparative Example 2 will be described. First, a solution was produced by dissolving $Ce(NO_3)_3 \cdot 6H_2O$ and $Pt(NH_3)_4(NO_3)_2$ in 200 mL of ion exchanged water, and molar fractions Ce:Pt were 0.83:0.17. The rest of the manufacturing method was performed in the same and/or similar manner as in Example 1, and thus the catalyst of Comparative Example 2 was obtained.

Comparative Example 3

The production of a catalyst of Comparative Example 3 will be described. First, a solution was produced by dissolving $Ce(NO_3)_3 \cdot 6H_2O$ and $Rh(NO_3)_3 \cdot nH_2O$ in 200 mL of ion exchanged water, and molar fractions Ce:Rh were 0.90:0.10. The rest of the manufacturing method was performed in the same and/or similar manner as in Example 1, and thus the catalyst of Comparative Example 3 was obtained.

Comparative Examples 4 and 5

The catalysts of Comparative Example 4 and Comparative Example 5 were each produced by the methods described in Non-Patent Document 1 and Non-Patent Document 2.

Table 2 lists data of the catalysts having the sample names of Examples 1 to 5 and the catalysts having the sample names of Comparative Examples 1 to 5. The data listed in Table 2 is (1) preparation composition, (2) number N of types of cation elements contained in catalyst, (3) number of types of rare earth elements contained in catalyst, (4) molar fraction of platinum group element in preparation composition, (5) molar fraction of platinum group element in produced catalyst, (6) solid solution rate of platinum group element, (7) value calculated by dividing configuration entropy $S_{config}$ of cation site by gas constant R, and (8) decomposition temperature $T_{decomp}$.

Note that the molar fraction of the platinum group element and the decomposition temperature $T_{decomp}$ were measured by thermogravimetric analysis. The solid solution rate of the platinum group element was calculated based on the molar fraction of the platinum group element measured by the thermogravimetric analysis. Specifically, the temperature was increased from room temperature to 1200°C at 10°C/min in an air atmosphere at 1 atm, and the molar fraction of the platinum group element and the decomposition temperature $T_{decomp}$ were measured by reading the amount of decrease in the catalyst weight and the starting temperature of the decrease. When the catalyst undergoes pyrolysis and the platinum group element present in the oxide is converted into a single metal, oxygen in an amount corresponded to the change are released. Based on the amount of decrease in the catalyst weight and the starting temperature of the decrease, the molar fraction and the decomposition temperature of the platinum group element can be determined. For the catalyst of Example 5, the pyrolysis did not occur even when the temperature was increased to 1200°C.

[Table 2]

| Sample name | Preparation composition | $N$ | Number of rare earth element | Molar fraction of platinum group element | | Solid solution rate | $S_{config}R^{-1}$ | | $T_{decomp}$ (°C) |
|---|---|---|---|---|---|---|---|---|---|
| | | | | Preparation | Catalyst | | Preparation | Catalyst | |
| Example 1 | $(Y_{0.17}La_{0.17}Ce_{0.17}Pr_{0.17}Sm_{0.17}Pt_{0.17})O_{2-\delta}$ | 6 | 5 | 0.167 | 0.128 | 77% | 1.79 | 1.79 | 891 |
| Example 2 | $(Y_{0.17}La_{0.17}Pr_{0.17}Nd_{0.17}Sm_{0.17}Pt_{0.17})O_{2-\delta}$ | 6 | 5 | 0.167 | 0.117 | 70% | 1.79 | 1.78 | 892 |
| Example 3 | $(Y_{0.13}La_{0.13}Ce_{0.13}Pr_{0.13}Nd_{0.13}Sm_{0.13}Gd_{0.13}Pt_{0.13})O_{2-\delta}$ | 8 | 7 | 0.125 | 0.106 | 84% | 2.08 | 2.08 | 954 |
| Example 4 | $(Y_{0.10}La_{0.10}Ce_{0.10}Pr_{0.10}Nd_{0.10}Sm_{0.10}Gd_{0.10}Dy_{0.10}Yb_{0.10}Pt_{0.10})O_{2-\delta}$ | 10 | 9 | 0.100 | 0.100 | 100% | 2.30 | 2.30 | 1063 |
| Example 5 | $(Y_{0.10}La_{0.10}Ce_{0.10}Pr_{0.10}Nd_{0.10}Sm_{0.10}Gd_{0.10}Dy_{0.10}Yb_{0.10}Pt_{0.10})O_{2-\delta}$ | 10 | 9 | 0.100 | - | - | 2.30 | - | >1200 |
| Comparative Example 1 | $(Ce_{0.90}Pt_{0.10})O_{2-\delta}$ | 2 | 1 | 0.100 | 0.033 | 33% | 0.33 | 0.15 | 768 |
| Comparative Example 2 | $(Ce_{0.83}Pt_{0.17})O_{2-\delta}$ | 2 | 1 | 0.167 | 0.033 | 20% | 0.45 | 0.15 | 867 |
| Comparative Example 3 | $(Ce_{0.90}Rh_{0.10})O_{2-\delta}$ | 2 | 1 | 0.100 | - | - | 0.33 | - | 1022 |
| Comparative Example 4 | $(Mg_{0.20}Co_{0.20}Ni_{0.20}Cu_{0.20}Zn_{0.20}Pt_{0.00036})O$ | 6 | 0 | 0.00036 | - | - | 1.61 | - | 750 |
| Comparative Example 5 | $(Mg_{0.20}Co_{0.20}Ni_{0.20}Cu_{0.20}Zn_{0.20}Pt_{0.018})O$ | 6 | 0 | 0.018 | <0.018 | Unknown | 1.67 | <1.67 | 750 |

FIG. 2 is a graph showing the decomposition temperatures with respect to the numbers of types of rare earth elements contained in the catalysts. FIG. 3 is a graph showing the molar fractions of platinum group elements with respect to the numbers of types of rare earth elements contained in the catalysts. As shown in Table 2, FIG. 2, and FIG. 3, the catalysts of Examples 1 to 5 had high decomposition temperatures and high solid solution rates of the platinum group element. This is conceived as follows. That is, the catalysts of Examples 1 to 5 contained 5 or more types of rare earth elements, each of the rare earth elements occupied 10% or more of the cation site in the crystalline structure. Accordingly, the catalysts of Examples 1 to 5 each had the configuration entropy $S_{config}$ of the cation site of the oxide of more than 1.7R (R is the gas constant) and small Gibbs energy of the oxide. It is conceived that, because of this, the high decomposition temperature and high solid solution rate of the platinum group element were achieved.

The solid solution rate of the platinum group element in the catalyst of the Example 1 was higher than the solid solution rate of the platinum group element in the catalyst of Example 2. It is conceived that, this is because the number of electrons that can be donated to the platinum group element was increased due to the catalyst of Example 1 containing Ce, and the platinum group element in the oxide was stabilized.

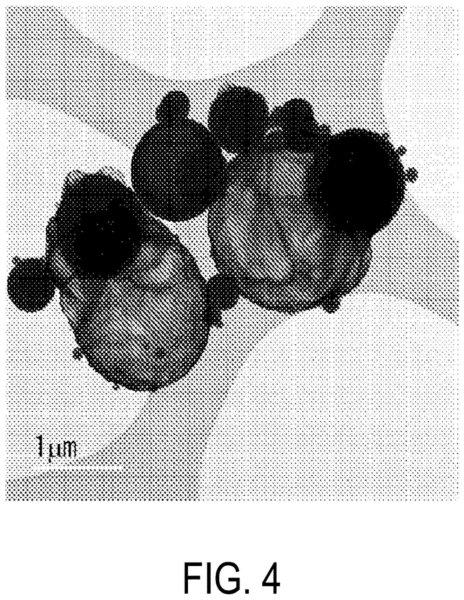

FIG. 4 is an STEM image of the catalyst of Example 1 observed by using a scanning transmission electron microscope (STEM). In an example of the STEM image shown in FIG. 4, (contour) of a mesh for STEM measurement was visible through particles in some regions where the mesh for STEM measurement (grid) and the particles were overlapped. From this, it was confirmed that the catalyst of Example 1 contained the particle having a hollow form.

Second Example

Further examples of the catalyst according to the present disclosure will be described below. In the present example, by the following manufacturing methods, a catalyst of Example 6 was produced as an example of the present disclosure and a catalyst of Comparative Example 6 was produced as a comparative example.

Example 6

The production of a catalyst of Example 6 will be described. First, a solution was produced by dissolving $Y(NO_3)_3 \cdot nH_2O$, $La(NO_3)_3 \cdot 6H_2O$, $Ce(NO_3)_3 \cdot 6H_2O$, $Pr(NO_3)_3 \cdot 6H_2O$, $Sm(NO_3)_3 \cdot 6H_2O$, and $Pd(NO_3)_2$ in 200 mL of ion exchanged water, and the solution had the following preparation composition. That is, the solution was produced in a manner that a molar fraction of Pd was 0.05, and molar fractions of the rest, which was five types of the rare earth elements, were equivalent amounts (molar fraction of each of the 5 types of the rare earth elements became 0.95/5 = 0.19). This solution was adjusted to have the total concentration of the rare earth elements and the platinum group element of 0.1 mol/L. The rest of the manufacturing method was performed in the same and/or similar manner as in Example 1, and thus the catalyst of Example 6 was obtained.

Comparative Example 6

The production of a catalyst of Comparative Example 6 will be described. First, a solution was produced by dissolving $Ce(NO_3)_3 \cdot 6H_2O$ and $Pd(NO_3)_2$ in 200 mL of ion exchanged water, and molar fractions Ce:Pd were 0.90:0.10. The rest of the manufacturing method was performed in the same and/or similar manner as in Example 1, and thus the catalyst of Comparative Example 6 was obtained.

For the catalysts of Example 6 and Comparative Example 6, the solid solution rate of the platinum group element and the decomposition temperature $T_{decomp}$ were measured by thermogravimetric analysis, and purification efficiency of NO was evaluated. The method for evaluating the catalytic activity will be described. The catalyst powder was placed in a quartz tube, and a reactive gas was allowed to flow at 0.5 L/min. The base composition of the reactive gas included 0.15% of NO, 0.35% of CO, 0.033% of $C_3H_6$, 0.25% of $O_2$, and 10% of $H_2O$, and the rest was $N_2$. Note that % used for a composition of a reactive gas means a molar proportion or a volume proportion in standard conditions, and the same applies to the descriptions below in the present specification. The composition of the reactive gas was varied in a manner that $O_2$ was +0.25% and CO was +0.5%, at 0.5 Hz. In this state, the temperature was increased at 10°C/min. The gas after reaction of the catalyst powder was evaluated by a gas analyzer (HORIBA PG-340), and the purification efficiency of NO was evaluated. When the specific surface areas of the used catalysts were evaluated by the BET method, all of them were in the range of 2.0 to 2.2 $m^2/g$.

Table 3 lists data of the catalyst having the sample name of Example 6 and the catalyst having the sample name of Comparative Example 6. The data listed in Table 3 is (1) preparation composition, (2) number N of types of cation elements contained in catalyst, (3) molar fraction of platinum group element in preparation composition, (4) molar fraction of platinum group element in produced catalyst, (5) solid solution rate of platinum group element, (6) value calculated by dividing configuration entropy $S_{config}$ of cation site by gas constant R, (7) decomposition temperature $T_{decomp}$, and (8) temperature at which purification percentage of NO became 50%. "(8) Temperature at which the purification percentage of NO became 50%" described above lists (i) initial characteristics of sample after synthesis, (ii) characteristics after aging treatment at 1000°C for 10 hours, and (iii) degree of deterioration of the characteristics, which was the difference between (i) and (ii) above.

[Table 3]

| Sample name | Preparation composition | N | Molar fraction of platinum group element | | Solid solution rate | $S_{config}R^{-1}$ | $T_{decomp}$ (°C) | Temperature at NO purification percentage of 50% (°C) | | |
|---|---|---|---|---|---|---|---|---|---|---|
| | | | Preparation | Catalyst | | | | Initial | After aging | Deterioration of characteristics |
| Example 6 | $(Y_{0.19}La_{0.19}Ce_{0.19}Pr_{0.19}Sm_{0.19}Pd_{0.05})O_{2-\delta}$ | 6 | 0.050 | 0.050 | 100% | 1.73 | 1096 | 347 | 364 | 17 |
| Comparative Example 6 | $(Ce_{0.90}Pd_{0.10})O_{2-\delta}$ | 2 | 0.100 | 0.042 | 42% | 0.33 | 810 | 269 | 379 | 110 |

The catalyst of Comparative Example 6 had a relatively low temperature at NO purification percentage of 50% as the initial characteristics (i.e., catalytic activity was relatively high). Meanwhile, when the aging treatment was performed, the catalyst of Comparative Example 6 had the temperature at NO purification percentage of 50% significantly increased (i.e., degree of deterioration of characteristics was large).

On the other hand, the catalyst of Example 6 had a small degree of deterioration of characteristics when the aging treatment was performed. That is, the catalyst of Example 6 tended to maintain the initial characteristics when the aging treatment was performed, and the catalyst of Example 6 having undergone the aging treatment exhibited a higher catalytic activity than that of the catalyst of Comparative Example 6 having undergone the aging treatment.

It is conceived that, because the catalyst of Comparative Example 6 had a small configuration entropy $S_{config}$, the solid solution state of Pd was unstable, the aging treatment caused phase separation of $CeO_2$ and Pd, the interface between the $CeO_2$ and the Pd decreased, and thus mitigation effects of oxygen partial pressure change by $CeO_2$ did not work effectively. As a result, the catalyst of Comparative Example 6 underwent significant deterioration of characteristics due to the aging. It is conceived that the catalyst of Comparative Example 6 underwent the deterioration of characteristics also because Pd was sintered.

Third Example

Further examples of the catalyst according to the present disclosure will be described below. In the present example, in addition to the catalyst of Example 6 described above, by the following manufacturing methods, catalysts of Examples 7 and 8 were produced as examples of the present disclosure and a catalyst of Comparative Example 7 was produced as a comparative example. Catalysts of Reference Examples 1 and 2 were also produced.

Example 7

The production of a catalyst of Example 7 will be described. The catalyst of Example 7 was produced in the same and/or similar manner as for the catalyst of Example 6 except for using $Nd(NO_3)_3 \cdot 6H_2O$ in place of $Y(NO_3)_3 \cdot nH_2O$ of the starting material.

Example 8

The production of a catalyst of Example 8 will be described. The catalyst of Example 8 was produced in the same and/or similar manner as for the catalyst of Example 6 except for using $Gd(NO_3)_3 \cdot 6H_2O$ in place of $La(NO_3)_3 \cdot 6H_2O$ of the starting material.

Comparative Example 7

The production of a catalyst of Comparative Example 7 will be described. First, a solution was produced by dissolving $La(NO_3)_3 \cdot 6H_2O$, $Ce(NO_3)_3 \cdot 6H_2O$, $Pr(NO_3)_3 \cdot 6H_2O$, and $Pt(NH_3)_4(NO_3)_2$ in 200 mL of ion exchanged water, and molar fractions La:Ce:Pr:Pd were 0.30:0.30:0.30:0.10. The rest of the manufacturing method was performed in the same and/or similar manner as in Example 1, and thus the catalyst of Comparative Example 7 was obtained.

Reference Example 1

The production of a catalyst of Reference Example 1 will be described. First, a solution was produced by dissolving $Y(NO_3)_3 \cdot nH_2O$, $Ce(NO_3)_3 \cdot 6H_2O$, $Gd(NO_3)_3 \cdot 6H_2O$, $Dy(NO_3)_3 \cdot 6H_2O$, $Yb(NO_3)_3 \cdot nH_2O$, and $Pd(NO_3)_2$ in 200 mL of ion exchanged water, and the solution had the following preparation composition. That is, the solution was produced in a manner that a molar fraction of Pd was 0.05, and molar fractions of the rest, which was five types of the rare earth elements, were equivalent amounts (molar fraction of each of the 5 types of the rare earth elements became 0.95/5 = 0.19). This solution was adjusted to have the total concentration of the rare earth elements and the platinum group element of 0.1 mol/L. The rest of the manufacturing method was performed in the same and/or similar manner as in Example 1, and thus the catalyst of Reference Example 1 was obtained.

Reference Example 2

The production of a catalyst of Reference Example 2 will be described. First, a solution was produced by dissolving $Y(NO_3)_3 \cdot nH_2O$, $La(NO_3)_3 \cdot 6H_2O$, $Pr(NO_3)_3 \cdot 6H_2O$, $Nd(NO_3)_3 \cdot 6H_2O$, $Sm(NO_3)_3 \cdot 6H_2O$, and $Pd(NO_3)_2$ in 200 mL of ion exchanged water, and the solution had the following preparation composition. That is, the solution was produced in a manner that a molar fraction of Pd was 0.05, and molar fractions of the rest, which was five types of the rare earth elements, were equivalent amounts (molar fraction of each of the 5 types of the rare earth elements became 0.95/5 = 0.19). This solution was adjusted to have the total concentration of the rare earth elements and the platinum group element of 0.1 mol/L. The rest of the manufacturing method was performed in the same and/or similar manner as in Example 1, and thus the catalyst of Reference Example 2 was obtained.

Table 4 lists data of the catalysts having the sample names of Examples 6 to 8, the catalysts having the sample names of Reference Examples 1 and 2, and the catalyst having the sample name of Comparative Example 7. The data listed in Table 4 is (1) preparation composition, (2) number N of types of cation elements contained in catalyst, (3) molar fraction of platinum group element in preparation composition, (4) molar fraction of platinum group element in produced catalyst, (5) solid solution rate of platinum group element, (6) value calculated by dividing configuration entropy $S_{config}$ of cation site by gas constant R, (7) decomposition temperature $T_{decomp}$, (8) average ionic radius r (Å) of rare earth elements contained in oxide, (9) oxygen release amount, and (10) crystalline structure. For (9) and (10), initial characteristics of sample after synthesis and characteristics after thermal treatment at 1000°C for 6 hours were listed. The oxygen release amount was determined by performing eliminated gas analysis by increasing the temperature from room temperature to 1000°C and integrating ionic current value of m/z = 32. The oxygen release amount of each sample was normalized based on the value of Reference Example 1. For the crystalline structure, the symbol C refers to the C-type rare earth oxide structure, and the symbol B refers to the B-type rare earth oxide structure.

[Table 4]

| Sample name | Preparation composition | $N$ | Molar fraction of platinum group element | | Solid solution rate | $S_{config}R^{-1}$ | $T_{decomp}$ (°C) | $r$(Å) | Oxygen release amount | | Crystalline structure | |
|---|---|---|---|---|---|---|---|---|---|---|---|---|
| | | | Preparation | Catalyst | | | | | Initial | After thermal treatment | Initial | After thermal treatment |
| Example 7 | $(La_{0.19}Ce_{0.19}Pr_{0.19}Nd_{0.19}Sm_{0.19}Pd_{0.05})O_{2-\delta}$ | 6 | 0.050 | 0.050 | 100% | 1.73 | 1104 | 0.99 | 18 | 70 | C | C |
| Example 6 | $(Y_{0.19}La_{0.19}Ce_{0.19}Pr_{0.19}Sm_{0.19}Pd_{0.05})O_{2-\delta}$ | 6 | 0.050 | 0.050 | 100% | 1.73 | 1096 | 0.97 | 21 | 40 | C | C |
| Example 8 | $(Y_{0.19}Ce_{0.19}Pr_{0.19}Sm_{0.19}Gd_{0.19}Pd_{0.05})O_{2-\delta}$ | 6 | 0.050 | 0.050 | 100% | 1.73 | 974 | 0.95 | 47 | 23 | C | C |
| Reference Example 1 | $(Y_{0.19}Ce_{0.19}Gd_{0.19}Dy_{0.19}Yb_{0.19}Pd_{0.05})O_{2-\delta}$ | 6 | 0.050 | 0.050 | 100% | 1.73 | 960 | 0.92 | 1 | 1 | C | C |
| Reference Example 2 | $(Y_{0.19}La_{0.19}Pr_{0.19}Nd_{0.19}Sm_{0.19}Pd_{0.05})O_{2-\delta}$ | 6 | 0.050 | 0.050 | 100% | 1.73 | 962 | 0.97 | 20 | 1 | C | B |
| Comparative Example 7 | $(La_{0.30}Ce_{0.30}Pr_{0.30}Pd_{0.10})O_{2-\delta}$ | 4 | 0.100 | 0.041 | 41% | 1.31 | 905 | 1.00 | 37 | 34 | C | C |

In all of the samples, the initial crystalline structure was the C-type rare earth oxide structure. With the catalyst of Reference Example 1, the oxygen release amount was relatively small. This is because the average ionic radius of the rare earth elements contained in the oxide was 0.92 Å, which was small. The catalysts having the average ionic radius of 0.95 Å or more, except the catalyst of Reference Example 1, had relatively large oxygen release amounts.

When the thermal treatment was performed for the catalysts of Examples 6 and 7 each having the average ionic radius of 0.97 Å or more, the catalysts after the thermal treatment had high oxygen release amounts. It is conceived that this is because the Coulomb attraction between the cation and the oxide ion became smaller due to the large average ionic radius of the rare earth elements contained in the oxide. However, with the catalyst of Reference Example 2, when the thermal treatment was performed, the phase transition to the B-type rare earth oxide structure occurred, and the oxygen release amount of the catalyst after the thermal treatment significantly decreased. This is because the catalyst of Reference Example 2 did not contain Ce. It was confirmed that, by setting the average ionic radius to 0.97 Å or more and allowing Ce to be contained, stability of the catalyst after thermal treatment can improve and a high oxygen release amount can be achieved.

Although the catalyst of Comparative Example 7 had the average ionic radius of 0.97 Å or more and contained Ce, the oxygen release amount after the thermal treatment was less than those of Examples 6 and 7. That is, when the Ce amount was more than 0.25, the oxygen release amount decreased.

Fourth Example

Further examples of the catalyst according to the present disclosure will be described below. In the present example, in addition to the catalyst of Example 6 described above, by the following manufacturing methods, catalysts of Reference Examples 3 to 5 were produced.

Reference Example 3

The production of a catalyst of Reference Example 3 will be described. A catalyst of Reference Example 3 was produced in the same and/or similar manner as for the catalyst of Example 6 except for using $Pt(NH_3)_4(NO_3)_2$ in place of $Pd(NO_3)_2$ of the starting material.

Reference Example 4

The production of a catalyst of Reference Example 4 will be described. The catalyst of Reference Example 4 was produced in the same and/or similar manner as for the catalyst of Example 6 except for using $Rh(NO_3)_3 \cdot nH_2O$ in place of $Pd(NO_3)_2$ of the starting material.

Reference Example 5

The production of a catalyst of Reference Example 5 will be described. The catalyst of Reference Example 5 was produced in the same and/or similar manner as for the catalyst of Example 6 except for using $Ru(NO)(NO_3)_3$ in place of $Pd(NO_3)_2$ of the starting material.

Table 5 lists data of the catalyst having the sample name of Example 6 and the catalysts having the sample names of Reference Examples 3 to 5. The data listed in Table 5 is (1) preparation composition, (2) number N of types of cation elements contained in catalyst, (3) molar fraction of platinum group element in preparation composition, (4) molar fraction of platinum group element in produced catalyst, (5) solid solution rate of platinum group element, (6) value calculated by dividing configuration entropy $S_{config}$ of cation site by gas constant R, (7) decomposition temperature $T_{decomp}$, and (8) temperatures at which purification percentages of NO, CO, and $C_3H_6$ became 50%. The evaluation of the catalytic activity was performed as described below, similarly to Second Example described above.

That is, the catalyst powder was placed in a quartz tube, and a reactive gas was allowed to flow at 0.5 L/min. The base composition of the reactive gas included 0.15% of NO, 0.35% of CO, 0.033% of $C_3H_6$, 0.25% of $O_2$, and 10% of $H_2O$, and the rest was $N_2$. The composition of the reactive gas was varied in a manner that $O_2$ was +0.25% and CO was +0.5%, at 0.5 Hz. In this state, the temperature was increased at 10°C/min. The gas after reaction of the catalyst powder was evaluated by a gas analyzer (HORIBA PG-340), and the purification efficiencies of NO, CO, and $C_3H_6$ were evaluated. When the specific surface areas of the used catalysts were evaluated by the BET method, all of them were in the range of 2.0 to 2.2 $m^2$/g.

[Table 5]

| Sample name | Preparation composition | N | Molar fraction of platinum group element | | Solid solution rate | $S_{config}R^{-1}$ | $T_{decomp}$ (°C) | Temperature at purification percentage of 50% (°C) | | |
|---|---|---|---|---|---|---|---|---|---|---|
| | | | Preparation | Catalyst | | | | NO | CO | $C_3H_3$ |
| Example 6 | $(Y_{0.19}La_{0.19}Ce_{0.19}Pr_{0.19}Sm_{0.19}Pd_{0.05})O_{2-\delta}$ | 6 | 0.050 | 0.050 | 100% | 1.73 | 1096 | 350 | 353 | 350 |
| Reference Example 3 | $(Y_{0.19}La_{0.19}Ce_{0.19}Pr_{0.19}Sm_{0.19}Pd_{0.05})O_{2-\delta}$ | 6 | 0.050 | 0.050 | 100% | 1.73 | 1151 | >600 | >600 | >600 |
| Reference Example 4 | $(Y_{0.19}La_{0.19}Ce_{0.19}Pr_{0.19}Sm_{0.19}Rh_{0.05})O_{2-\delta}$ | 6 | 0.050 | 0.050 | 100% | 1.73 | 1149 | >600 | >600 | >600 |
| Reference Example 5 | $(Y_{0.19}La_{0.19}Ce_{0.19}Pr_{0.19}Sm_{0.19}Ru_{0.05})O_{2-\delta}$ | 6 | 0.050 | 0.050 | 100% | 1.73 | 1083 | >600 | >600 | 548 |

The catalyst of Example 8 containing Pd as the platinum group element had a lower temperature at which the purification percentages of NO, CO, and $C_3H_6$ became 50% of those of the catalysts of Reference Examples 3 to 5. From this, it was confirmed that a relatively high catalytic activity can be achieved by allowing the catalyst to contain Pd.

The invention according to the present disclosure has been described above based on the drawings and examples. However, the invention according to the present disclosure is not limited to each embodiment described above. That is, the invention according to the present disclosure can be variously modified within the scope indicated in the present disclosure, and an embodiment to be obtained by appropriately combining technical means disclosed in different embodiments is also included in the technical scope of the invention according to the present disclosure. In other words, note that a person skilled in the art can easily make various variations or modifications based on the present disclosure. Also note that these variations or modifications are included within the scope of the present disclosure.

REFERENCE SIGNS LIST

1 Exhaust gas purifier
2 Honeycomb structure

**Claims**

1. A catalyst comprising an oxide containing not less than 5 types of rare earth elements and not less than 1 type of platinum group element,

   wherein a configuration entropy in cation site determined based on:

   (i) the number of types of the rare earth elements and the platinum group element that can be arranged in the cation site in a crystalline structure of the oxide; and
   (ii) each proportion of the rare earth elements and the platinum group element,

   is more than 1.7R, where R is a gas constant.

2. A catalyst comprising an oxide containing not less than 5 types of rare earth elements and not less than 1 type of platinum group element,
   wherein each of the rare earth elements occupies not less than 10% of a cation site in a crystalline structure of the oxide.

3. The catalyst according to claim 1 or 2, wherein the rare earth elements contain Ce.

4. The catalyst according to any one of claims 1 to 3, wherein the rare earth elements and the platinum group element are contained in the same molar fractions.

5. The catalyst according to any one of claims 1 to 4, having a decomposition temperature in an air atmosphere at 1 atm of not lower than 890°C.

6. The catalyst according to any one of claims 1 to 5, wherein each of not less than 5 types of the rare earth elements occupies not less than 10% and not more than 17% of the cation site in the crystalline structure of the oxide.

7. The catalyst according to any one of claims 1 to 6, wherein not less than 5 types of the rare earth elements are selected from the group consisting of Sc, Y, and a lanthanoid.

8. The catalyst according to any one of claims 1 to 7, wherein the oxide contains not less than 5 types and not more than 9 types of the rare earth elements.

9. The catalyst according to any one of claims 1 to 8, wherein not less than 1 type of the platinum group element is selected from the group consisting of Ru, Rh, Pd, Os, Ir, and Pt.

10. The catalyst according to any one of claims 1 to 9, wherein the rare earth elements have an average ionic radius of not less than 0.95 Å.

11. The catalyst according to any one of claims 1 to 10, wherein the rare earth elements contain Ce, Ce occupying not less than 10% and not more than 25% of the cation site in the crystalline structure of the oxide, the rare earth elements having the average ionic radius of not less than 0.97 Å.

12. The catalyst according to any one of claims 1 to 11, wherein the platinum group element contains Pd.

13. The catalyst according to any one of claims 1 to 12, which is for exhaust gas purification.

14. A honeycomb structure supporting the catalyst according to any one of claims 1 to 13.

15. An exhaust gas purifier comprising the catalyst according to any one of claims 1 to 13.

FIG. 1

$T_{\mathrm{decomp}}$ (°C)

THE NUMBER OF RARE EARTH ELEMENT

FIG. 2

MOLAR
FRACTION
OF
PLATINUM
GROUP
ELEMENT

THE NUMBER OF RARE EARTH ELEMENT

FIG. 3

1 μm

FIG. 4

## INTERNATIONAL SEARCH REPORT

| | International application No. |
|---|---|
| | PCT/JP2021/012657 |

### A. CLASSIFICATION OF SUBJECT MATTER

B01J 23/63(2006.01)i; B01D 53/94(2006.01)i; F01N 3/10(2006.01)i
FI:      B01J23/63 A ZAB; B01D53/94 222; B01D53/94 245; B01D53/94 280;
         F01N3/10 A

According to International Patent Classification (IPC) or to both national classification and IPC

### B. FIELDS SEARCHED

Minimum documentation searched (classification system followed by classification symbols)
B01J21/00-38/74; B01D53/94; F01N3/10

Documentation searched other than minimum documentation to the extent that such documents are included in the fields searched
Published examined utility model applications of Japan       1922–1996
Published unexamined utility model applications of Japan     1971–2021
Registered utility model specifications of Japan             1996–2021
Published registered utility model applications of Japan     1994–2021

Electronic data base consulted during the international search (name of data base and, where practicable, search terms used)
CAplus/REGISTRY (STN); JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2019-520974 A (BASF CORPORATION) 25 July 2019 (2019-07-25) claims 1-5, paragraphs [0031]-[0033], example 1 | 1-15 |
| A | JP 2014-168750 A (MAZDA MOTOR CORPORATION) 18 September 2014 (2014-09-18) claim 1, paragraphs [0039], [0059] | 1-15 |
| A | CN 107961794 A (INNER MONGOLIA UNIVERSITY OF SCIENCE & TECHNOLOGY) 27 April 2018 (2018-04-27) claims 1-5, paragraphs [0037], [0052] | 1-15 |
| A | CN 108946787 A (ANHUI UNIVERSITY OF TECHNOLOGY) 07 December 2018 (2018-12-07) claims 1, 2, paragraph [0002], examples 1-3 | 1-15 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 May 2021 (11.05.2021) | 18 May 2021 (18.05.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2021/012657

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-94628 A (MAZDA MOTOR CORPORATION) 30 April 2010 (2010-04-30) claim 1, paragraph [0031] | 1-15 |

Form PCT/ISA/210 (continuation of second sheet) (January 2015)

INTERNATIONAL SEARCH REPORT
Information on patent family members

International application No.

PCT/JP2021/012657

| Patent Documents referred in the Report | Publication Date | Patent Family | Publication Date |
|---|---|---|---|
| JP 2019-520974 A | 25 Jul. 2019 | WO 2017/218092 A2 claims 1-5, page 6, lines 1-30, example 1 US 2019/0299192 A1 EP 3468711 A2 KR 10-2019-0008251 A CN 109414683 A | |
| JP 2014-168750 A | 18 Sep. 2014 | (Family: none) | |
| CN 107961794 A | 27 Apr. 2018 | (Family: none) | |
| CN 108946787 A | 07 Dec. 2018 | (Family: none) | |
| JP 2010-94628 A | 30 Apr. 2010 | (Family: none) | |

Form PCT/ISA/210 (patent family annex) (January 2015)

**EP 4 129 468 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **H. CHEN et al.** *J. Mater. Chem. A,* 2018, vol. 6, 11129-11133
- **H. CHEN et al.** *ACS Materials Lett.,* 2019, vol. 1, 83-88
- **R. D. SHANNON.** *Acta. Cryst. A,* 1976, vol. 32, 751